# EUROPEAN PATENT SPECIFICATION

(11) **EP 2 234 392 B1**
(45) Date of publication and mention of the grant of the patent: **29.11.2017**
(21) Application number: 09700348.7
(22) Date of filing: 07.01.2009
(51) Int. Cl.: H04N 5/91, G11B 27/034, H04N 5/00

(54) **MATERIAL PROCESSING APPARATUS AND MATERIAL PROCESSING METHOD**
MATERIALVERARBEITUNGSVORRICHTUNG UND MATERIALVERARBEITUNGSVERFAHREN
APPAREIL DE TRAITEMENT DE MATÉRIAU ET PROCÉDÉ DE TRAITEMENT DE MATÉRIAU

(30) Priority: 07.01.2008 JP 2008000599
(43) Date of publication of application: 29.09.2010
(73) Proprietor: Kabushiki Kaisha Toshiba, Minato-ku Tokyo 105-8001 (JP)
(72) Inventor: HASHIMOTO, Tomohisa, Shibaura 1-chome, Minato-ku Tokyo 105-8001 (JP)
(74) Representative: Hoffmann Eitle
(86) International application number: PCT/JP2009/050090
(87) International publication number: WO 2009/088024

(56) References cited:
- EP-A2- 1 592 015
- WO-A1-2006/054590
- WO-A1-2007/023623
- JP-A- 2005 004 868
- JP-A- 2008 035 394
- US-A1- 2005 237 865
- US-A1- 2006 059 200

## Description

### Technical Field

The present invention relates to a material processing apparatus and material processing method that transform material such as video/audio data for used in, for example, programs to broadcast, in the course of recording the material.

### Background Art

As known in the art, any system for transmitting broadcast programs, the materials of any broadcast program to broadcast are first stored in a record/playback apparatus, are then played back in accordance with playback instructions, and the program is finally put to an on-air process. In most cases, the materials are confirmed prior to the on-air process, in the order they should be put on air.

The material is confirmed by the record/playback apparatus, which converts the material to a material exchange format (MXF) file and transfers the file to an editing apparatus, while it is recording the material.

If the material being recorded may be too long to be converted to one MXF file, the material will be divided into parts for time lines, each defining data amount that can be transferred, and a plurality of MXF files will therefore be generated. In this case, the time line data about the entire recorded material is recorded in the header part of each MXF file.

Therefore, if the material recorded needs to be changed in data configuration, the time line data recorded in the header part of each MXF file must be corrected. To correct the time line data is very cumbersome to the operator.

Jpn. Pat. Appln. KOKAI Publication No. 2005-4868 (Patent Document 1) discloses, as a prior technique to solve this problem, a configuration that extracts and manages the clip data about a content from the content data recorded on an optical disk. However, the configuration described in Patent Document 1 aims to play back the data smoothly from the optical disk, not to correct the header part of each MXF file as the recorded material changes in data configuration.

As indicated above, in the conventional record/playback apparatus, the time line data about the entire recorded material, which is recorded in the header part of each MXF file, must be corrected in order to change the data configuration of the material recorded. Hence, the operator needs to perform a very cumbersome work. The work is troublesome, particularly when the number of MXF files is huge.

### Disclosure of Invention

Accordingly, an object of this invention is to provide a material processing apparatus and material processing method that can correct time line data with ease and in a short time, as the material recorded changes in data configuration.

To achieve the object described above, a material processing apparatus according to this invention is designed to encode material data and recording the encoded data on a recording medium, to generate, from the encoded data, transfer data of a standardized file structure including a header part and a body part containing the encoded data, and to transfer the transfer data to an editing apparatus, the header part containing a clip that is the sequence beginning with the start of material recording and terminating with the end of material recording. The apparatus comprises: header generating means for analyzing the encoded data, dividing the encoded data into timelines capable of being transferred to the editing apparatus and for inserting time line data representing the order in which to transmit timelines, into the header part of the transfer data; file generating means for inserting division data associated with the timeline data, into the body part following the header part generated by the header generating means, to generate one-file transfer data, and for outputting the one-file transfer data to the editing apparatus; and file generating means for generating a first clip data file and outputting the same to the editing apparatus after the file generating means has generated one-file transfer data for the first timeline of the timelines dividing the encoded data, the first timeline defining the time at which to start the recording, the first clip data file containing the timeline data about the clip corresponding to the first timeline, and clip data file generating means for generating a second clip data file and outputting the same to the editing apparatus after the file generating means has generated one-file transfer data for the second time line following the first timeline, the second clip data having been generated by combining the timeline data of a clip corresponding to the first and second timelines with the link data for linking this timeline data to the transfer data for the first timeline, for generating a third clip data file and outputting the same to the editing apparatus after the file generating means has generated one-file transfer data for the third timeline following the second timeline, the third clip data having been generated by combining the timeline data contained in the second clip data file with the link data for linking this time line data to the transfer data for the second timeline.

In order to convert material being recorded to MXF files, this configuration does not record the timeline data for the entire clip in the header parts of the MXF files for image, sound and ancillary, respectively, but records the timeline data for only the files, and generates a new clip-data MXF file other than these MXF files, which contains the present timeline data, the timeline data for the preceding MXF files, and the link data. The new clip-data MXF file is output to an editing apparatus.

Hence, the editing apparatus only needs to correct the clip data file in accordance with the changes in the data configuration of the recorded material. The time line data can therefore be corrected, not only with ease, but also in a short time.

### Brief Description of Drawings

FIG. 1 is a block diagram showing an audio-video record/playback apparatus that is an embodiment of this invention, and the configuration peripheral to the apparatus;
FIG. 2 is a diagram showing the structure of an MXF file generated in the embodiment;
FIG. 3 is a timing chart explaining a conventional process of transferring an MXF file;
FIG. 4 is a timing chart explaining a process of transferring an MXF file generated in the embodiment and containing images, sounds and ancillaries;
FIG. 5 a timing chart explaining a process of transferring a clip data MXF file in the embodiment; and
FIG. 6 is a flowchart showing a process of generating an MXF file in the embodiment.

### Best Mode for Carrying Out the Invention

An embodiment of this invention will be described in detail, with reference to the accompanying drawings.

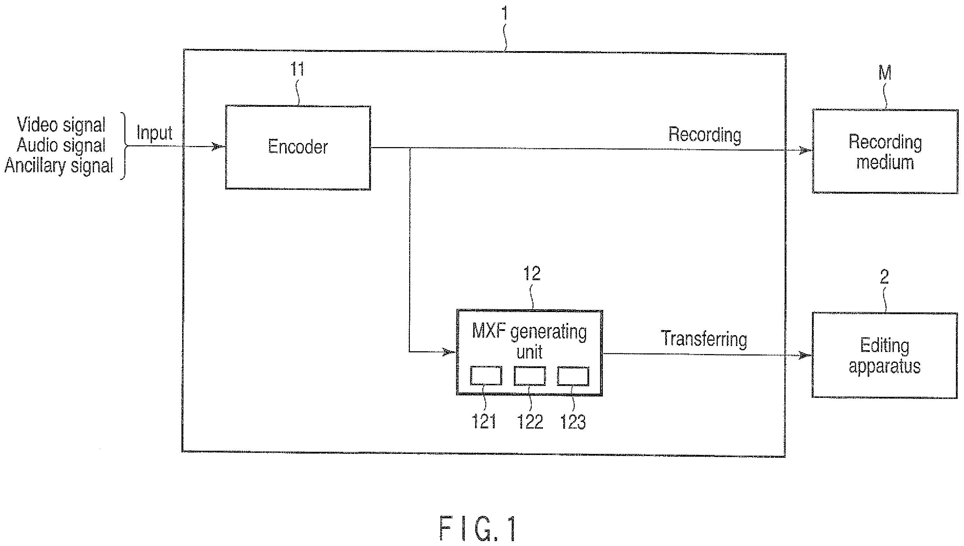

FIG. 1 is a block diagram showing a video-audio record/playback apparatus that is an embodiment of this invention, and the configuration peripheral to the apparatus. In FIG. 1, reference number 1 is the video-audio record/playback apparatus, which has an encoder 11 and an MXF generating unit 12. In the video-audio record/playback apparatus 1, a recording medium M, such as a disk, is removably inserted. Further, an editing apparatus 2 is connected to the video-audio record/playback apparatus 1.

The encoder 11 compresses and encodes a video signal, an audio signal and an ancillary signal, all input to the video-audio record/playback apparatus 1. These signals, thus compressed and encoded, are recorded on the recording medium M. At the same time the signals are recorded, the MXF generating unit 12 converts the output of the encoder 11 to an MXF file. The MXF file is output to the editing apparatus 2. The operation sequence beginning with the start of material recording and terminating with the end of material recording will hereinafter referred to as "clip."

The MXF generating unit 12 has a header generating function 121, a file generating function 122, and a clip data generating function 123. The header generating function 121 analyzes the encoded data representing the image, sound and ancillary, divides the data into time lines, generating timeline data that represents the order in which the timelines should be transmitted, and inserts the timeline data into the header part of an MXF file.

The file generating function 122 inserts division data associated with the timeline data, for the image, sound and ancillary, into the body part following the header part generated by the header generating function 121. The file generating function 122 thereby generates an MXF file, which is output to the editing apparatus 2.

After the file generating function 122 has generated the MXF file, the clip data generating function 123 generates a clip-data MXF file by combining the present time line data of clip for each timeline, the timeline data of clip for the immediately preceding MXF file, and link data to be linked to the immediately preceding MXF file. The clip-data MXF file is output to the editing apparatus 2.

How the MXF file is transferred in the configuration described above will be explained below.

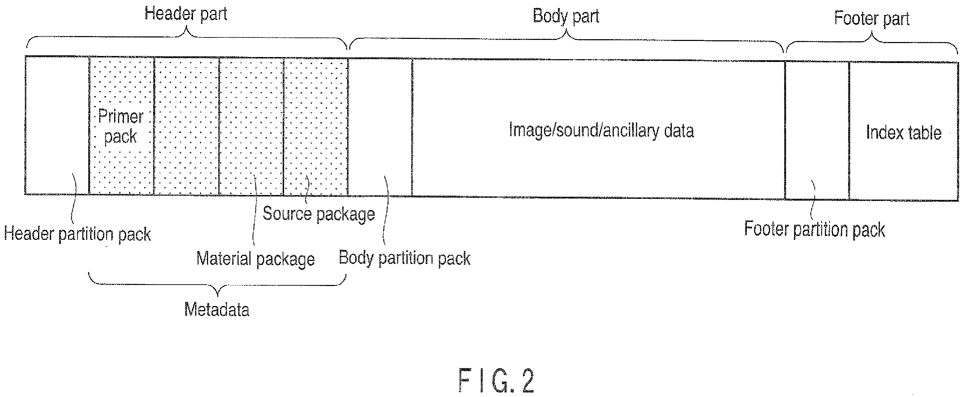

FIG. 2 is a diagram showing the structure of the MXF file. The MXF file is composed mainly of a header part, a body part, and a footer part. The header part describes metadata in the main. The metadata is composed of a material package, a file package, and the like.

The file package is data about the material input to the apparatus 1. The material package is the timeline data about the clip to output from the apparatus 1. The body part stores mainly the data body in the main such as the image, sound and ancillary. The footer part receives and stores index data (hereinafter referred to as "SMPTE377M) in the main.

Various types (operational patterns) of MXF files are available. In this embodiment, the MXF file is so-called OP-Atom type. OP-Atom type is a scheme (hereinafter referred to as "SMPTE390M") in which only one track data item is recorded in one file. The case wherein the material is composed of three tracks, i.e., image, sound and ancillary, will be described below.

The material being recorded may be large. In this case, each track is converted to a plurality of MXF files, not to a single MXF file, in the process of converting the recorded material to an MXF file.

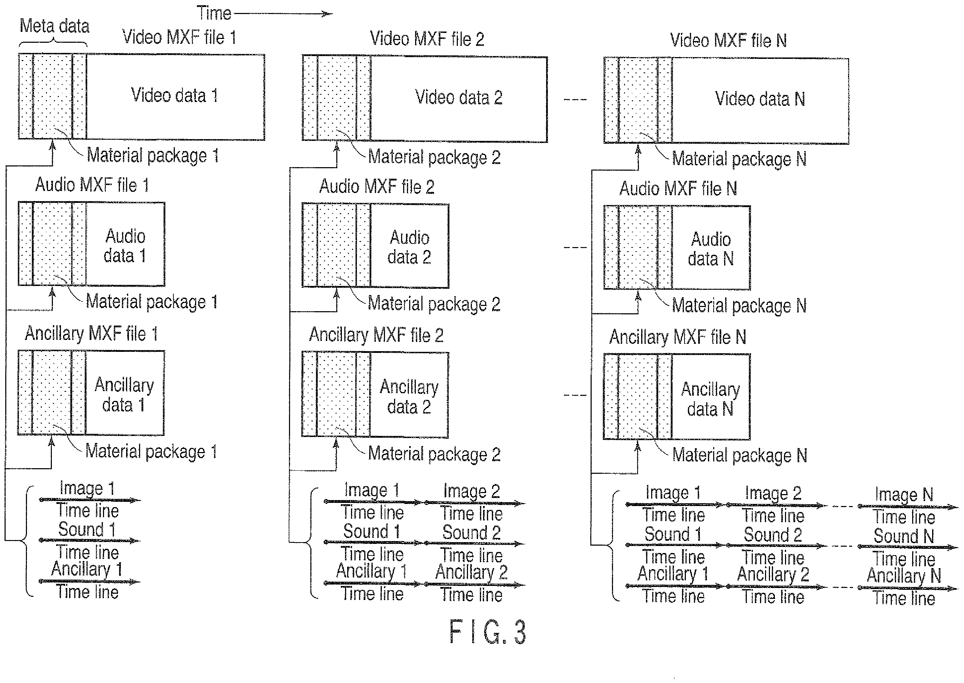

If this is the case, the timeline data about all data items, i.e., the first to Nth data items, is hitherto recorded in the material package of each MXF file as shown in FIG. 3. In this method, however, the timeline data about the clip is inevitably dispersed in all MXF files that constitute the clip.

Assume here that MXF files having images, sounds and ancillaries of the same serial number are synchronized with one another and have the same number of frames.

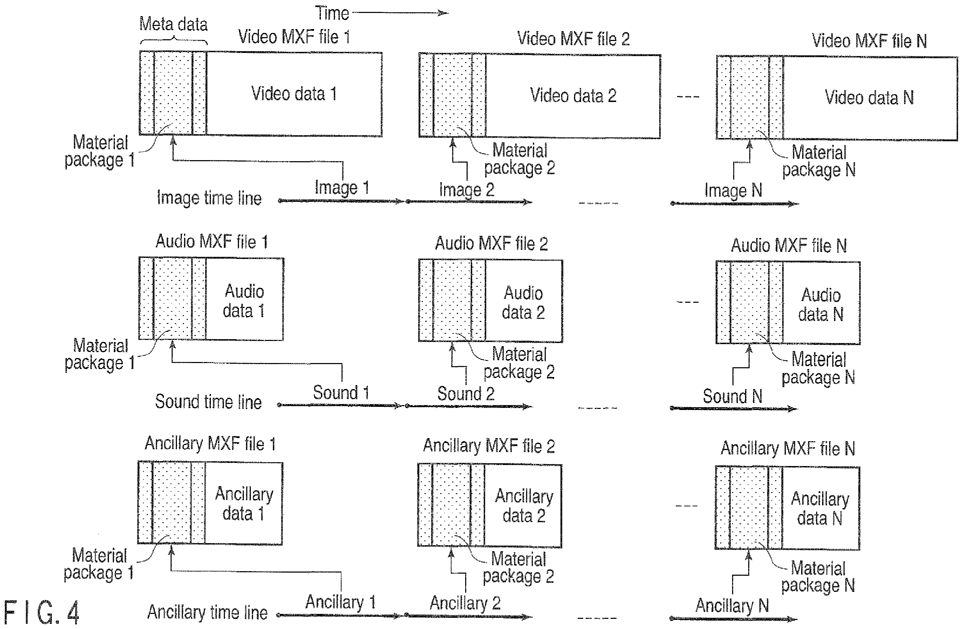

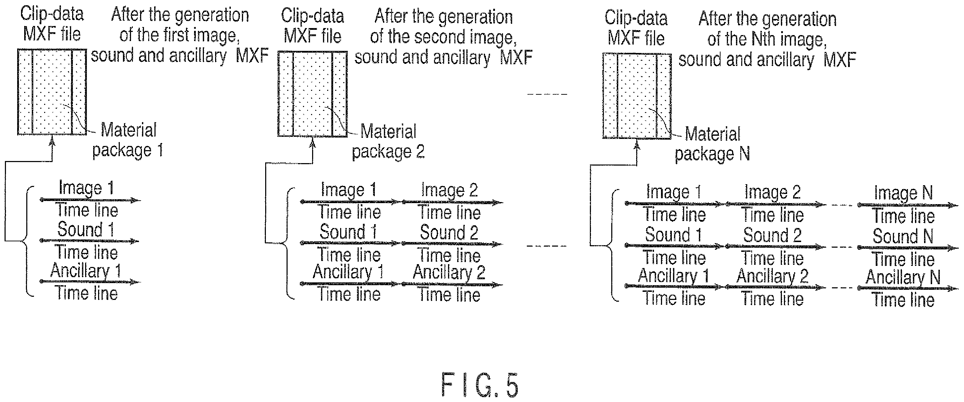

Then, in this embodiment, the material package of the MXF file for each track contains only the timeline data of its own as shown in FIG. 4. Further, in addition to the MXF file for each track, an MXF file (hereinafter called "clip-data MXF file") is generated. The clip-data MXF file describes timeline data for the present clip and timeline data for all preceding clips, but the immediately preceding one, both shown in FIG. 5, and also timeline data for the clip immediately preceding the present clip. The clip-data MXF file is updated and transferred every time an MXF file for all tracks (first to Nth tracks) is completely generated. In this configuration, the data about the entire clip is collected in only the clip-data MXF file.

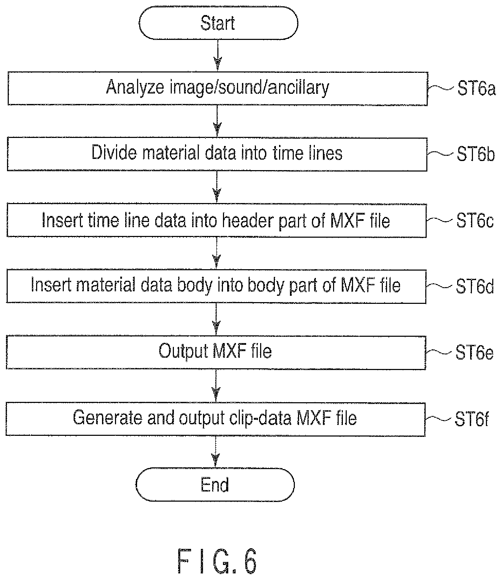

FIG. 6 is a flowchart showing how the MXF generating unit 12 generates an MXF file.

First, the MXF generating unit 12 analyzes the data being recorded and representing the recorded image, sound and ancillary (Step ST6a). The MXF generating unit 12 then divides the encoded data into a plurality of time lines if the material is too large to transfer to the editing apparatus 2 (Step ST6b). Further, the MXF generating unit 12 inserts the time line data about the file into the metadata stored in the header part of the MXF file (Step ST6c).

Next, the MXF generating unit 12 inserts the encoded data bodies for the image, sound and ancillary into the body part of the MXF file, which follows the header part (Step ST6d). The MXF generating unit 12 therefore generates a MXF file, which is output to the editing apparatus 2 (Step ST6e).

After one MXF file has been generated, the MXF generating unit 12 generates clip-data MXF file that is a combination of the present timeline data for each timeline, the timeline data for the immediately preceding MXF file, and link data for linking the MXF file to the immediately preceding MXF file. The MXF generating unit 12 outputs the clip-data MXF file to the editing apparatus 2 (Step ST6f). Note that the clip-data MXF file for the time line at which the recording has started contains only the timeline data about the clip (image 1, sound 1 and ancillary 1).

The sequence of Steps ST6a to ST6f is repeated until the recording is completed.

In the embodiment described above, the header generating function 121 of the MXF generating unit 12 does not record the timeline data for the entire clip in the header parts of the MXF files for image, sound and ancillary, respectively, in order to transfer the material being recorded, in the form of MXF files. Rather, the header generating function 121 records the timeline data for only the files. The clip data generating function 123 generates a clip-data MXF file other than these MXF files, which contains the present timeline data, the timeline data for the preceding MXF files, and the link data. This clip-data MXF file is output to the editing apparatus 2.

Thus, the data about the entire clip is collected in the clip-data MXF file. Therefore, tracks can be added to and deleted from the clip, merely by changing data in the clip-data MXF file. Moreover, in order to combine the MXF files of any tracks available, thereby to form a new clip, it suffices to generate a new clip-data MXF file and to describe the timeline data and link data for the new clip, in the new clip-data MXF file. That is, it is relatively easy to form the new clip.

The present invention is not limited to the embodiment described above. Various changes and modifications can be made in reducing the invention to practice, without departing from the scope of the invention. Further, the components of the embodiment described above may be combined, if necessary, in various ways to make different inventions. For example, some of the component of the embodiment may not be used. Moreover, the components of different embodiments may be combined in any desired fashion.

## Claims

1. A material processing apparatus (1) for encoding material data and recording the encoded data on a recording medium (M), for generating, from the encoded data, material exchange format, MXF, files including a header part and a body part containing the encoded data, and for transferring the MXF files to an editing apparatus (2), the header part containing data about a clip, the clip being an operation sequence beginning with the start of material recording of the encoded data and terminating with the end of material recording of the encoded data, the material data comprising at least one of video, sound, and ancillary data,
**characterized by** comprising:
header generating means (121) for analyzing the encoded data, dividing the encoded data into a plurality of timelines if the encoded data is too large to be transferred to the editing apparatus (2) and for inserting respective timeline data about the timeline representing the order in which to transmit timelines, into the header part of a respective MXF file;
file generating means (122) for inserting the timeline associated with the respective timeline data, into the body part following the header part generated by the header generating means (121), to generate one-file transfer data as the respective MXF files, and for outputting the one-file transfer data to the editing apparatus; and
clip data file generating means (123) for
generating a clip data file other than the respective MXF files and outputting the same to the editing apparatus (2) after the file generating means has generated a first MXF file for the first time-line of the timelines dividing the encoded data, the first timeline being the timeline at which the recording has started, the first clip data file containing the timeline data corresponding to the first timeline,
updating the clip data file and outputting the same to the editing apparatus (2) after the file generating means (122) has generated a second MXF file for a second timeline of the timelines dividing the encoded data, the updated clip data file being generated by combining timeline data corresponding to the second timeline and timeline data corresponding to preceding timelines and containing link data for linking the second MXF file to an immediately preceding MXF file.

2. The material processing apparatus (1) according to claim 1, **characterized in that** the header generating means (121) is configured to divide the encoded data into timelines for image, sound, and ancillary data, respectively, and insert the timeline data for the respective timelines into the header part of the respective MXF files; and the file generating means (122) is configured to insert the timeline associated with the timeline data, into the body part following the header part generated by the header generating means (121), thereby generating the respective MXF files, and to output the respective MXF files a to the editing apparatus (2), in respect to the image, sound, and ancillary data, respectively.

3. A material processing method of encoding material data and recording the encoded data on a recording medium (M), for generating, from the encoded data, material exchange format, MXF, files including a header part and a body part containing the encoded data, and for transferring the MXF files to an editing apparatus (2), the header part containing data about a clip, the clip being an operation sequence beginning with the start of material recording of the encoded data and terminating with the end of material recording of the encoded data, the material data comprising at least one of video, sound, and ancillary data,
**characterized by** comprising:
analyzing (ST6a) the encoded data, dividing (ST6b) the encoded data into a plurality of timelines if the encoded data is too large to be transferred to the editing apparatus (2) and inserting (ST6c) respective timeline data about the timeline into the header part of a respective MXF file, the timelines which represents the order in which to transmit timelines;
inserting (ST6d) the timeline associated with the respective timeline data, into the body part following the header part generated by the header generating means (121), to generating one-file transfer data as the respective MXF files, and outputting (ST6e) the one-file transfer data to the editing apparatus (2);
generating (ST6f) a clip data file other than the respective MXF files and outputting the same to the editing apparatus (2) after a first MXF file has been generated for the first timeline of the timelines dividing the encoded data, the first time being the time-line at which the recording has started, the first clip data file containing the timeline data corresponding to the first timeline;
updating (ST6f) the clip data file and outputting the same to the editing apparatus (2) after a second MXF file is generated for a second timelines of the timelines dividing the encoded data, the updated clip data file being generated by combining timeline data corresponding to the second timeline and timeline data corresponding to preceding timelines and containing link data for linking the second MXF file to an immediately preceding MXF file.

## Patentansprüche

1. Materialverarbeitungsvorrichtung (1) zum Codieren von Materialdaten und Aufzeichnen der codierten Daten auf einem Aufzeichnungsmedium (M), zum Erzeugen von Material Exchange Format-Dateien, MXF-Dateien, aufweisend einen Kopfteil und einen Körperteil, der die codierten Daten enthält, und zum Übertragen der MXF-Dateien an eine Editiervorrichtung (2), wobei der Kopfteil Daten über einen Clip enthält , wobei der Clip eine Vorgangsreihenfolge ist, die mit dem Start der Materialaufzeichnung der codierten Daten beginnt und mit dem Ende der Materialaufzeichnung der codierten Daten endet, wobei die Materialdaten mindestens eins aus Video-, Ton- und Zusatzdaten umfassen,
**dadurch gekennzeichnet, dass** sie umfasst:
kopferzeugendes Mittel (121) zum Analysieren der codierten Daten, Teilen der codierten Daten in eine Vielzahl von Zeitachsen, wenn die codierten Daten zu groß für die Übertragung an die Editiervorrichtung (2) sind, sowie zum Einfügen der jeweiligen Zeitachsendaten über die Zeitachse, die die Reihenfolge darstellt, in der die Zeitachsen in den Kopfteil einer entsprechenden MXF-Datei zu übertragen sind;
dateierzeugendes Mittel (122) zum Einfügen der Zeitachse, die mit den entsprechenden Zeitachsendaten verbunden ist, in den Körperteil, der auf den Kopfteil folgt, der von dem kopferzeugenden Mittel (121) erzeugt wurde, um Einzeldateiübertragungsdaten als die entsprechenden MXF-Dateien zu erzeugen, sowie zum Ausgeben der Einzeldateiübertragungsdaten an die Editiervorrichtung; und
clipdatendateierzeugende Mittel (123) zum
Erzeugen einer Clipdatendatei, anders als die entsprechenden MXF-Dateien, und Ausgeben derselben an die Editiervorrichtung (2), nachdem das dateierzeugende Mittel eine erste MXF-Datei für die erste Zeitachse der Zeitachsen erzeugt hat, die die codierten Daten teilt, wobei die erste Zeitachse die Zeitachse ist, auf der die Aufzeichnung gestartet wurde, wobei die erste Clipdatendatei die Zeitachsendaten enthält, die der ersten Zeitachse entsprechen,
Aktualisieren der Clipdatendatei und Ausgeben derselben an die Editiervorrichtung (2), nachdem das dateierzeugende Mittel (122) eine zweite MXF-Datei für eine zweite Zeitachse der Zeitachsen erzeugt hat, die die codierten Daten teilt, wobei die aktualisierte Clipdatendatei durch Kombinieren der Zeitachsendaten erzeugt wird, die der zweiten Zeitachse entsprechen und der Zeitachsendaten, die den vorangehenden Zeitachsen entsprechen, und Linkdaten zum Verlinken der zweiten MXF-Datei mit einer unmittelbar vorangehenden MXF-Datei enthält.

2. Materialverarbeitungsvorrichtung (1) nach Anspruch 1, **dadurch gekennzeichnet, dass** das kopferzeugende Mittel (121) konfiguriert ist, die codierten Daten in Zeitachsen für jeweils Bild-, Ton- und Zusatzdaten zu teilen, und die Zeitachsendaten für die entsprechenden Zeitachsen in den Kopfteil der entsprechenden MXF-Dateien einzufügen; und dass das dateierzeugende Mittel (122) konfiguriert ist, die Zeitachse, die mit den Zeitachsendaten verbunden ist, in den Körperteil einzufügen, der auf den Kopfteil folgt, der durch das kopferzeugende Mittel (121) erzeugt wurde, wodurch die entsprechenden MXF-Dateien erzeugt werden, und die entsprechenden MXF-Dateien jeweils hinsichtlich der Bild-, Ton- und Zusatzdaten an die Editiervorrichtung (2) auszugeben.

3. Materialverarbeitungsverfahren zum Codieren von Materialdaten und Aufzeichnen der codierten Daten auf einem Aufzeichnungsmedium (M), zum Erzeugen von Material Exchange Formatdateien, MXF-Dateien, aufweisend einen Kopfteil und einen Körperteil, der die codierten Daten enthält, und zum Übertragen der MXF-Dateien an eine Editiervorrichtung (2), wobei der Kopfteil Daten über einen Clip enthält, wobei der Clip eine Vorgangsreihenfolge ist, die mit dem Start der Materialaufzeichnung der codierten Daten beginnt und mit dem Ende der Materialaufzeichnung der codierten Daten endet, wobei die Materialdaten mindestens eins aus Video-, Ton- und Zusatzdaten umfasst
**dadurch gekennzeichnet, dass** es umfasst:
Analysieren (ST6a) der codierten Daten, Teilen (ST6b) der codierten Daten in eine Vielzahl von Zeitachsen, wenn die codierten Daten zu groß sind, um an die Editiervorrichtung (2) übertragen zu werden und Einfügen (ST6c) entsprechender Zeitachsendaten über die Zeitachse in den Kopfteil einer entsprechenden MXF-Datei, wobei die Zeitachsen die Reihenfolge darstellen, in der die Zeitachsen zu übertragen sind;
Einfügen (ST6d) der Zeitachse, die mit den entsprechenden Zeitachsendaten verbundenen ist, in den Körperteil, der auf den Kopfteil folgt, der von dem kopferzeugenden Mittel (121) erzeugt wurde, um Einzeldateiübertragungsdaten als die entsprechenden MXF-Dateien zu erzeugen, sowie Ausgeben (ST6e) der Einzeldateiübertragungsdaten an die Editiervorrichtung (2);
Erzeugen (ST6f) einer Clipdatendatei, anders als die entsprechenden MXF-Dateien, und Ausgeben derselben an die Editiervorrichtung (2), nachdem eine erste MXF-Datei für die erste Zeitachse der Zeitachsen erzeugt wurde, die die codierten Daten teilt, wobei die erste Zeitachse die Zeitachse ist, auf der die Aufzeichnung gestartet wurde, wobei die erste Clipdatendatei die Zeitachsendaten enthält, die der ersten Zeitachse entsprechen;
Aktualisieren (ST6f) der Clipdatendatei und Ausgeben derselben an die Editiervorrichtung (2) nachdem eine zweite MXF-Datei für eine zweite Zeitachse der Zeitachsen erzeugt wurde, die die codierten Daten teilt, wobei die aktualisierte Clipdatendatei durch Kombinieren der Zeitachsendaten erzeugt wird, die der zweiten Zeitachse entsprechen und der Zeitachsendaten, die den vorangehenden Zeitachsen entsprechen, und Linkdaten zum Verlinken der zweiten MXF-Datei mit einer unmittelbar vorangehenden MXF-Datei enthält.

## Revendications

1. Appareil de traitement de matériel (1) pour coder des données de matériel et enregistrer les données codées sur un support d'enregistrement (M), pour générer, à partir des données codées, un format d'échange de matériel, MXF, des fichiers comprenant une partie d'en-tête et une partie de corps contenant les données codées, et pour transférer les fichiers MXF vers un appareil d'édition (2), la partie d'en-tête contenant des données sur un clip, le clip étant une séquence d'opérations commençant par le début de l'enregistrement de matériel des données codées et se terminant par la fin de l'enregistrement de matériel des données codées, les données de matériel comprenant au moins des données d'image, sonores ou auxiliaires,
**caractérisé en ce qu'**il comprend :
un moyen de génération d'en-tête (121) pour analyser les données codées, diviser les données codées en une pluralité de lignes chronologiques si les données codées sont trop volumineuses pour être transférées à l'appareil d'édition (2) et
pour insérer des données de ligne chronologique respectives concernant la ligne chronologique représentant l'ordre dans lequel transmettre des lignes chronologiques, dans la partie d'en-tête d'un fichier MXF respectif;
un moyen de génération de fichier (122) pour insérer la ligne chronologique associée aux données de ligne chronologique respectives, dans la partie de corps suivant la partie d'en-tête générée par le moyen de génération d'en-tête (121),
pour générer des données de transfert de fichier unique sous la forme de fichiers MXF respectifs, et pour délivrer en sortie les données de transfert de fichier unique à l'appareil d'édition ; et
un moyen de génération de fichier de données de clip (123) pour
générer un fichier de données de clip autre que les fichiers MXF respectifs et délivrer en sortie celui-ci à l'appareil d'édition (2) après que le moyen de génération de fichier ait généré un premier fichier MXF pour la première ligne chronologiques parmi les lignes chronologiques divisant les données codées, la première ligne chronologique étant la ligne chronologique à laquelle l'enregistrement a débuté, le premier fichier de données de clip contenant les données de ligne chronologique correspondant à la première ligne chronologique,
mettre à jour le fichier de données de clip et délivrer en sortie celui-ci à l'appareil d'édition (2) après que le moyen de génération de fichier (122) ait généré un second fichier MXF pour une seconde ligne chronologiques parmi les lignes chronologiques divisant les données codées, le fichier de données de clip mis à jour étant généré en combinant des données de ligne chronologique correspondant à la seconde ligne chronologique et des données de ligne chronologique correspondant à des lignes chronologiques précédentes et contenant des données de liaison pour relier le second fichier MXF à un fichier MXF immédiatement précédent.

2. Appareil de traitement de matériel (1) selon la revendication 1, **caractérisé en ce que** le moyen de génération d'en-tête (121) est configuré pour diviser les données codées en lignes chronologiques pour des données d'image, sonores et auxiliaires, respectivement, et insérer les données de ligne chronologique pour les lignes chronologiques respectives dans la partie d'en-tête des fichiers MXF respectifs ; et le moyen de génération de fichier (122) est configuré pour insérer la ligne chronologique associée aux données de ligne chronologique, dans la partie de corps suivant la partie d'en-tête générée par le moyen de génération d'en-tête (121), en générant ainsi les fichiers MXF respectifs, et pour délivrer en sortie les fichiers MXF respectifs à l'appareil d'édition (2), concernant les données d'image, sonores et auxiliaires, respectivement.

3. Procédé de traitement de matériel pour coder des données de matériel et enregistrer les données codées sur un support d'enregistrement (M), pour générer, à partir des données codées, un format d'échange de matériel, MXF, des fichiers comprenant une partie d'en-tête et une partie de corps contenant les données codées, et pour transférer les fichiers MXF vers un appareil d'édition (2), la partie d'en-tête contenant des données sur un clip, le clip étant une séquence d'opérations commençant par le début de l'enregistrement de matériel des données codées et se terminant par la fin de l'enregistrement de matériel des données codées, les données du matériel comprenant au moins des données d'image, sonores ou auxiliaires,
**caractérisé en ce qu'**il comprend :
analyser (ST6a) les données codées, diviser (ST6b) les données codées en une pluralité de lignes chronologiques si les données codées sont trop volumineuses pour être transférées à l'appareil d'édition (2) et insérer (ST6c) des données de ligne chronologique respectives concernant la ligne chronologique dans la partie d'en-tête d'un fichier MXF respectif, les lignes chronologiques représentant l'ordre dans lequel transmettre les lignes chronologiques ;
insérer (ST6d) la ligne chronologique associée aux données de ligne chronologique respectives, dans la partie de corps suivant la partie d'en-tête générée par le moyen de génération d'en-tête (121), pour générer des données de transfert de fichier unique sous la forme de fichiers MXF respectifs, et délivrer en sortie (ST6e) les données de transfert de fichier unique à l'appareil d'édition (2) ;
générer (ST6f) un fichier de données de clip autre que les fichiers MXF respectifs et délivrer en sortie celui-ci à l'appareil d'édition (2) après qu'un premier fichier MXF ait été généré pour la première ligne chronologique parmi les lignes chronologiques divisant les données codées, le premier temps correspondant à la ligne chronologique à laquelle l'enregistrement a commencé, le premier fichier de données de clip contenant les données de ligne chronologique correspondant à la première ligne chronologique ;
mettre à jour (ST6f) le fichier de données de clip et délivrer en sortie de celui-ci à l'appareil d'édition (2) après qu'un second fichier MXF ait été généré pour une seconde ligne chronologique parmi les lignes chronologiques divisant les données codées, le fichier de données de clip mis à jour étant généré en combinant des données de ligne chronologique correspondant à la seconde ligne chronologique et des données de ligne chronologique correspondant à des lignes chronologiques précédentes et contenant des données de liaison pour relier le second fichier MXF à un fichier MXF immédiatement précédent.
